# EUROPÄISCHE PATENTSCHRIFT

(11) **EP 2 001 747 B1**
(45) Veröffentlichungstag und Bekanntmachung des Hinweises auf die Patenterteilung: **17.08.2011**
(21) Anmeldenummer: 07712117.6
(22) Anmeldetag: 26.01.2007
(51) Int. Cl.: B65B 43/52, B65G 17/12

(54) **TRANSPORTEINRICHTUNG**
TRANSPORTING ARRANGEMENT
DISPOSITIF DE TRANSPORT

(30) Priorität: 24.03.2006 DE 102006013697
(43) Veröffentlichungstag der Anmeldung: 17.12.2008
(73) Patentinhaber: Robert Bosch GmbH, 70442 Stuttgart (DE)
(72) Erfinder: KOMP, Rainer, 71522 Backnang (DE)
(86) Internationale Anmeldenummer: PCT/EP2007/050801
(87) Internationale Veröffentlichungsnummer: WO 2007/110261

(56) Entgegenhaltungen:
- EP-A- 1 433 706
- EP-A1- 0 875 459
- EP-A2- 1 145 960
- GB-A- 758 349
- GB-A- 1 010 123

## Beschreibung

### Stand der Technik

Die vorliegende Erfindung betrifft eine Transporteinrichtung zum Transportieren von Produkten, insbesondere von körnigen Produkten in Beuteln o.ä., entlang einer Förderstrecke in einer Füll- und/oder Verpackungsanlage.

Transporteinrichtungen sind aus dem Stand der Technik in unterschiedlichen Ausgestaltungen bekannt. Bekannte Transporteinrichtungen umfassen beispielsweise ein waagerecht angeordnetes, umlaufendes Transportband, auf welchem Produkte gefördert werden können. Ferner ist aus der DE 102 11 120 A1 eine Vorrichtung zum Speichern und Zuführen von flachgelegten Packungszuschnitten bekannt, welche zwei senkrecht angeordnete umlaufende Transportbänder umfasst, wobei die Packungszuschnitte zwischen den beiden Transportbändern gefördert werden.

Aus der DE 101 62 601 A1 ist eine Vorrichtung zum Transport von Verpackungen entlang einer Transportbahn bekannt, welche auf unterschiedliche Größen von Verpackungen eingestellt werden kann.

Aus der EP-A-875459 ist bereits eine Tubenfüllmaschine bekannt. Diese besitzt eine im wesentlichen in einer Ebene umlaufende Transportvorrichtung mit einer Vielzahl von Halteelementen, in die jeweils eine Tube einsetzbar und durch einzelne Arbeitsstationen transportierbar ist. Um die Tuben bei dem Durchlauf durch die Tubenfüllmaschine in einfacher Weise in ihrer Ausrichtung verändern und anpassen zu können, ist die Ebene der Transportvorrichtung unter einem Winkel α gegenüber der Horizontalen geneigt und die Tube derart in dem Halteelement gehalten, dass ihre Längsachse unter einem Winkel β gegenüber der Ebene der Transportvorrichtung geneigt verläuft, wobei der Winkel α und/oder der Winkel β vorzugsweise in einem Bereich von 20 Grad bis 70 Grad liegen.

Erfindungsgemäss umfasst die Transporteinrichtung eine umlaufende Schiene, welche ortsfest angeordnet sind. Jeder Halter der Förderelemente ist an einem auf der Schiene angeordneten Laufwagen verfahrbar an der Schiene angeordnet und jeder Halter ist mit einem der vorstehenden Elemente am Transportmittel verbunden. Somit ist jedes Förderelement über einen Halter mit dem Transportmittel verbunden, wobei sich jedoch der Halter nicht am Transportmittel abstützt, sondern über den Laufwagen an der ortsfesten Schiene. Dadurch wird verhindert, dass das Transportmittel mit dem Gewicht der Förderelemente sowie dem Gewicht der durch die Förderelemente aufgenommenen Produkte, belastet wird.

Die Unteransprüche zeigen bevorzugte Weiterbildungen der Erfindung.

Vorzugsweise umfassen ferner Förderelemente, welche gemeinsam mit dem Transportmittel umlaufen, um ein Produkt zu fördern, einen Halter mit einem ersten Schenkel und einem zweiten Schenkel, wobei die beiden Schenkel zueinander in einem Winkel von ca. 135° zueinander angeordnet sind. Die Förderelemente sind dabei derart an dem abgewinkelten Halter angeordnet, dass eine Öffnung der Förderelemente entlang einer Förderstrecke des Transportmittels nach oben geöffnet sind. Die Förderelemente sind dabei besonders bevorzugt senkrecht zur waagerechten Ebene angeordnet, so dass eine Zuführung eines Produktes von oben in die Förderelemente möglich ist. Somit sind die Förderelemente zu einer Ebene durch ein Obertrum und ein Untertrum des Transportmittels durch den abgewinkelten Halter in einem Winkel von ca. 45° angeordnet.

Vorzugsweise umfasst das umlaufende Transportmittel an seiner nach außen gerichteten Seite eine Vielzahl von vorstehenden Elementen, welche sich mit den Förderelementen in Verbindung befinden. Hierdurch wird es ermöglicht, dass die Förderelemente einfach vom Transportmittel gelöst werden können und beispielsweise bei Beschädigung eines Förderelements einfach ausgetauscht werden können. Die vorstehenden Elemente sind vorzugsweise nach außen vorstehende Rippen am Transportmittel, welche senkrecht zur Laufrichtung des Transportmittels angeordnet sind.

Weiter bevorzugt umfassen die Förderelemente jeweils eine erste und eine zweite Seitenwand, welche im Wesentlichen parallel zueinander angeordnet sind. Dabei ist eine erste Seitenwand an einem ersten Halter fixiert und eine zweite Seitenwand ist an einem zweiten Halter fixiert. Dies ermöglicht einen besonders einfachen Aufbau bei geringem Gewicht. Ein besonders kompakter Aufbau ergibt sich, wenn an einem Halter eine Seitenwand eines ersten Förderelements fixiert ist und gleichzeitig auch eine Seitenwand eines zweiten Förderelements am gleichen Halter fixiert ist. Eine noch geringere Teileanzahl ergibt sich, wenn an einem Halter lediglich eine einzige Seitenwand fixiert ist, wobei diese eine Seitenwand mit einer Wandfläche ein Teil eines ersten Förderelements ist und mit ihrer anderen Wandfläche ein Teil eines zweiten Förderelements ist.

Ein besonders kostengünstiger und einfacher Aufbau ergibt sich, wenn das Transportband vorzugsweise ein Zahnriemen ist.

Gemäß einer weiteren bevorzugten Ausgestaltung der Erfindung ist das Förderelement unten offen und unterhalb des Förderelements ist eine Tragschieneneinrichtung angeordnet. Die Tragschieneneinrichtung verhindert dabei, dass Produkte, welche durch das Förderelement aufgenommen wurden und gefördert werden sollen, nach unten hindurchfallen.

Die Tragschieneneinrichtung umfasst vorzugsweise mehrere einzelne Tragschienen, wobei die Tragschienen höhenverstellbar angeordnet sind und das Förderelement an seiner unteren offenen Seite eine Vielzahl von Schlitzen umfasst, in welche die einzelnen Tragschienen in Vertikalrichtung verschiebbar angeordnet sind. Dadurch kann ermöglicht werden, dass ein Volumen des Förderelements durch vertikale Verstellung der Tragschienen verändert werden kann. Dadurch ist die Transporteinrichtung für unterschiedlich große Produkte, insbesondere für Produkte mit unterschiedlichen Abmessungen oder Füllhöhen, wie z.B. flexible Beutel, in welche ein Produkt eingefüllt ist, verwendbar.

Um eventuell herabfallendes Fördergut, insbesondere bei einem körnigen oder pulverförmigen Fördergut, welches in einem Beutel oder bei einer anderen Verpackung angeordnet ist, aufzufangen, ist vorzugsweise unterhalb des Transportbandes eine Rinne angeordnet. Da die erfindungsgemäße Transporteinrichtung nur eine sehr geringe Bauhöhe in Vertikalrichtung aufweist, ist eine einfache Erreichbarkeit und Reinigbarkeit der Rinne möglich.

Weiter bevorzugt umfasst die erfindungsgemäße Transporteinrichtung eine Rüttelvorrichtung, um die Förderelemente bzw. das geförderte Produkt während der Förderung zu rütteln. Dadurch kann bei einem körnigen oder pulverförmigen Fördergut eine Verdichtung während der Förderung erreicht werden. Weiter bevorzugt ist am Ende der Förderstrecke eine Verschließeinrichtung angeordnet, um eine geöffnete Verpackung insbesondere nach dem Rüttelvorgang zu verschließen. Die Verpackung ist dabei vorzugsweise aus einem Kunststoff, so dass die Verschlusseinrichtung die Umverpackung einfach verschweißen kann.

Die erfindungsgemäße Transporteinrichtung wird insbesondere bei Füll- und/oder Verpackungsmaschinen, vorzugsweise im Lebensmittelbereich, zur Förderung und

Verpackung von körnigen oder pulverförmigen Gütern, z.B. Zucker, Salz, Mehl, Kaffee, Gewürzen, usw., verwendet.

Kurze Beschreibung der Zeichnungen

Nachfolgend wird ein Ausführungsbeispiel der Erfindung unter Bezugnahme auf die begleitenden Zeichnungen beschrieben. In den Zeichnungen ist:
- Figur 1: eine perspektivische Ansicht einer Verpackungsmaschine mit einer Transporteinrichtung gemäß einem Ausführungsbeispiel der Erfindung,
- Figur 2: eine Seitenansicht der in Figur 1 gezeigten Transporteinrichtung,
- Figur 3: eine perspektivische Ansicht der Transporteinrichtung von den Figuren 1 und 2, wobei lediglich die wesentlichen Bauteile der Transporteinrichtung gezeigt sind,
- Figur 4: eine stirnseitige Ansicht der erfindungsgemäßen Transporteinrichtung, und
- Figur 5: eine Seitenansicht der erfindungsgemäßen Transporteinrichtung.

Ausführungsformen der Erfindung

Nachfolgend wird unter Bezugnahme auf die begleitenden Zeichnungen eine Füll- und Fördermaschine 1 mit einer erfindungsgemäßen Transporteinrichtung 2 im Detail beschrieben

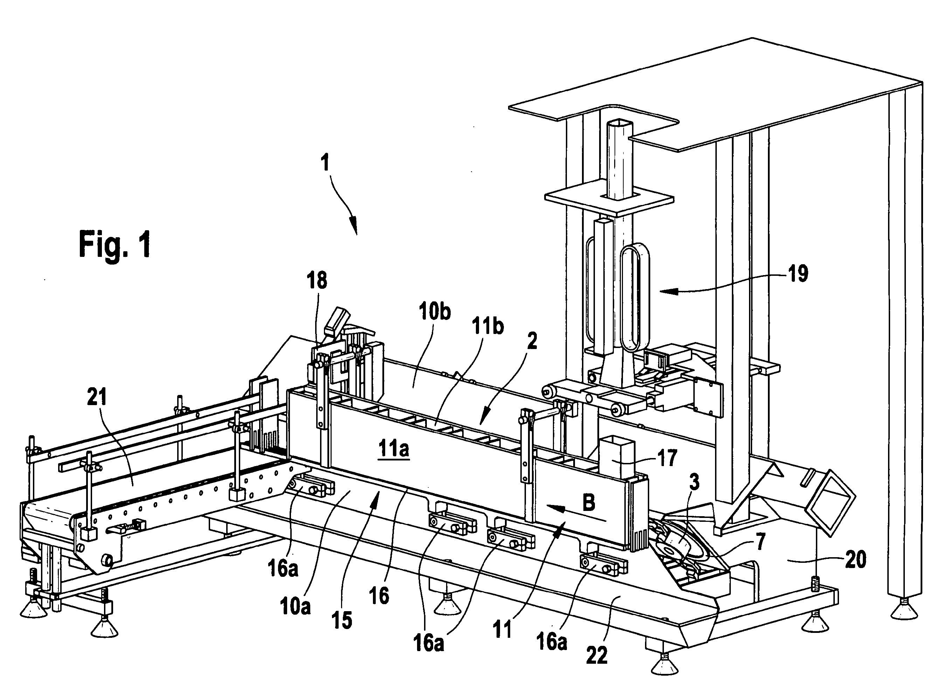

Wie aus Figur 1 ersichtlich ist, umfasst die Füll- und Fördermaschine 1 die Transporteinrichtung 2, welche an einem Maschinengestell 20 befestigt ist. Ferner umfasst die Füll- und Fördermaschine 1 eine Schlauchbeutelmaschine 19, in welcher ein abzupackendes, körniges Gut in Kunststoffbeutel eingefüllt wird.

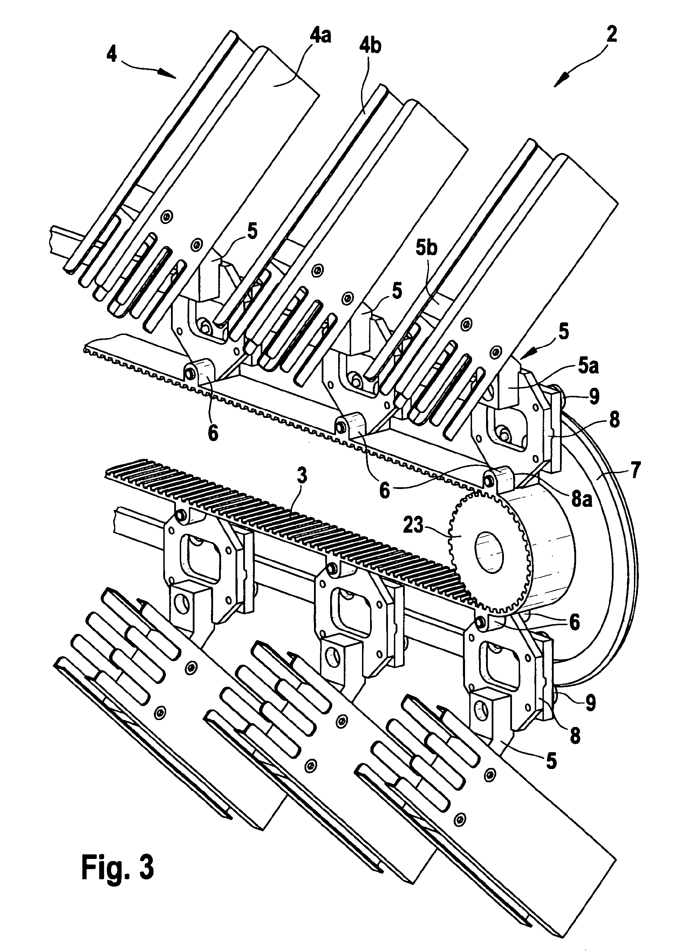

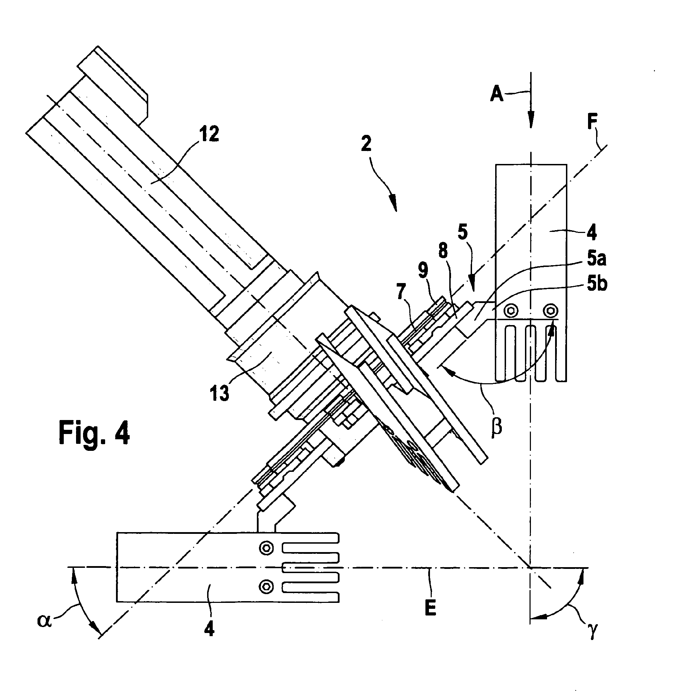

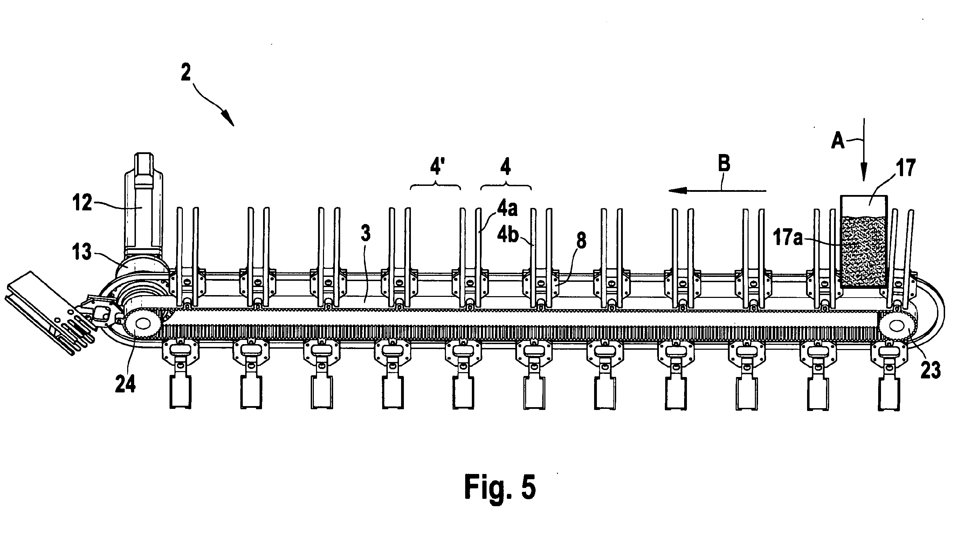

Die erfindungsgemäße Transporteinrichtung 2 ist im Detail in den Figuren 3 bis 5 gezeigt. Die Transporteinrichtung 2 umfasst als Transportmittel ein umlaufendes Transportband 3, welches in diesem Ausführungsbeispiel ein Zahnriemen ist. Der Zahnriemen wird an einem ersten Zahnriemenrad 23 und einem zweiten Zahnriemenrad 24 umgelenkt (vgl. Figur 5). Die Transporteinrichtung 2 umfasst ferner eine Vielzahl von Förderelementen 4, welche entlang des Transportbandes 3 nacheinander angeordnet sind. Wie insbesondere aus Figur 5 ersichtlich ist, bestehen die Förderelemente 4 dieses Ausführungsbeispiels aus einer ersten Seitenwand 4a und einer zweiten Seitenwand 4b. Ferner umfasst die Transporteinrichtung 2 eine Vielzahl von Haltern 5, wobei an jedem Halter 5 jeweils eine Seitenwand von zwei zueinander benachbarten Förderelementen angeordnet sind. Der Halter 5 ist abgewinkelt ausgeführt und umfasst einen ersten Schenkel 5a und einen zweiten Schenkel 5b, welche zueinander in einem Winkel β (vgl. Figur 4) angeordnet sind. Der Winkel β beträgt dabei 135°. Wie weiter aus Figur 4 ersichtlich ist, ist das Transportband 3 in einer Ebene F angeordnet, welche senkrecht zum Obertrum und Untertrum des Transportbandes ist und welche eine waagrechte Ebene E des Maschinengestells 20 in einem Winkel α von 45° schneidet. Mit anderen Worten ist das Transportband 3 in einem Winkel von 45° geneigt zum Maschinengestell 20 angeordnet.

Wie weiter aus Figur 3 ersichtlich ist, ist jeder Halter 5 an einem Laufwagen 8 befestigt, wobei jeder Laufwagen 8 vier Rollen 9 umfasst, welche an einer ortsfesten Schiene 7 laufen. Die Schiene ist als umlaufendes Oval gebildet und ebenfalls in einem Winkel von 45° zur Ebene E angeordnet. Am Laufwagen 8 ist ferner eine Ausnehmung 8a ausgebildet, welche sich mit einem vorstehenden Element 6, das an der äußeren Seite des Transportbandes 3 angeordnet ist, in Eingriff befindet. Die Ausnehmung 8a ist in diesem Ausführungsbeispiel eine Passnut. Das vorstehende Element 6 ist in diesem Ausführungsbeispiel eine nach außen vorstehende Rippe mit Mitnehmerbolzen, kann jedoch beliebig ausgeführt werden.

Die obige Konstruktion mit separatem Laufwagen 8, welcher an einer ortsfesten Schiene 7, die ebenfalls im gleichen Winkel wie das Transportband zur Ebene E angeordnet ist und als umlaufendes Oval gebildet ist, ermöglicht es, dass das Transportband 3 keine Gewichtskräfte von den Förderelementen 4 bzw. von den durch diese geförderten Produkte aufnehmen muss.

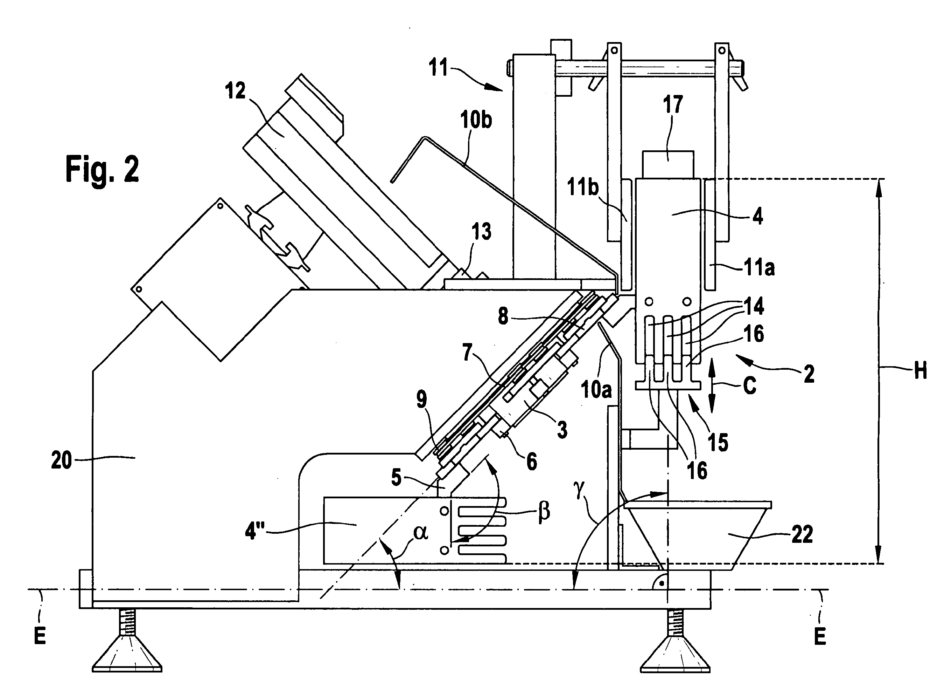

Der Aufbau der Förderelemente 4 dieses Ausführungsbeispiels ist dabei derart, dass an einem Halter 5, welcher an einem Laufwagen 8 angeordnet ist, jeweils eine Seitenwand eines ersten Förderelements 4 und eine Seitenwand eines zweiten Förderelements 4' angeordnet ist (vgl. Figur 5). Die beiden Seitenwände sind dabei im Wesentlichen parallel zueinander angeordnet und die erste Seitenwand an einem Halter 5 bildet einmal die schiebende Förderelementhälfte für ein Förderelement und die andere Seitenwand an dem gleichen Halter bildet die voreilende Förderelementhälfte für das benachbarte Förderelement. Die Förderelemente 4 bestehen somit im Wesentlichen lediglich aus zwei senkrecht zur Transportrichtung B angeordneten Seitenwänden 4a, 4b. Um ein seitliches Herausfallen der Produkte zu vermeiden, sind seitlich entlang der Förderstrecke zu beiden Seiten Wände 11a, 11b angeordnet (vgl. Figur 1 und 2). In Figur 1 ist mit dem Bezugszeichen 11 nur schematisch eine Rütteleinrichtung bezeichnet. Mittels der Rütteleinrichtung 11 vibriert das im Förderelement 4 geförderte Produkt, so dass bei einem pulverförmigen Produkt eine Verdichtung des Produkts während der Förderung erfolgen kann.

Die Transporteinrichtung 2 umfasst ferner einen Antrieb 12, welcher als Elektromotor (Servomotor) ausgebildet ist und ein Getriebe 13, welches zwischen dem Antrieb 12 und dem angetriebenen Zahnriemenrad 24 angeordnet ist.

Um eine gewisse Variabilität der geförderten Güter bzw. der Produktgrößen der zu fördernden Güter sicherzustellen, weisen die Seitenwände 4a, 4b der Förderelemente an ihrem unteren Bereich Schlitze 14 auf. Ferner ist am unteren Bereich eine Tragschieneneinrichtung 15 angeordnet, um ein Herausfallen der zugeführten Produkte zu vermeiden. Die Tragschieneneinrichtung 15 umfasst mehrere Tragschienen 16, welche durch einen Hebelmechanismus 16a in Vertikalrichtung verschiebbar angeordnet sind. Dadurch können sich die Tragschienen 16 in den Schlitzen 14 in Vertikalrichtung nach oben bzw. nach unten bewegen, wie durch den Doppelpfeil C in Figur 2 angedeutet. Da die Tragschienen 16 den Boden der Förderelemente 4 bilden, können somit mit der gleichen Maschine unterschiedliche Füllgrößen weiterverarbeitet werden. Hierdurch weist die Maschine eine große Variabilität auf.

Der Übergabepunkt zwischen der Schlauchbeutelmaschine 19 und der Transporteinrichtung 2 ist ferner derart gewählt, dass die schiebende Seitenwand am Übergabepunkt noch nicht vollständig senkrecht positioniert ist, so dass sich der Beutel 17 einfacher in das Förderelement 4 einsetzen lässt.

Am Ende der Förderstrecke, wie in Figur 1 gezeigt, ist eine Verschließeinrichtung 18 angeordnet, um die geförderten und gegebenenfalls gerüttelten Produkte zu verschließen. In dem dargestellten Ausführungsbeispiel sind die geförderten Produkte Kunststoffbeutel 17, welche mit einem körnigen Füllgut 17a gefüllt sind. Somit ist die Verschließeinrichtung 18 am Ende der Förderstrecke eine Kunststoffschweißeinrichtung oder eine Falteinrichtung, um die oben offenen Beutel zu falten und zu verschließen. Nach der Verschließeinrichtung 18 werden die verschlossenen Beutel 17 auf das Förderband 21 abgegeben, von welchem sie dann entnommen und weiter verpackt werden können (z.B. in Kartons).

Wie insbesondere aus den Figuren 1 und 2 weiter ersichtlich ist, ist unterhalb der Transporteinrichtung 2 eine Rinne 22 angeordnet. Die Rinne 22 dient zur Aufnahme von eventuell herunterfallendem Fördergut. Im Unterschied zum Stand der Technik kann diese Rinne 22 einfach gereinigt werden, da die Rückförderung der Förderelemente 4 nicht unterhalb der gerade fördernden Förderelemente 4 erfolgt. Wie aus den Figuren 2 und 4 ersichtlich ist, sind die Förderelemente 4 am Untertrum, welche gerade keine Produkte fördern, in einem Winkel γ von 90° zu den fördernden Förderelementen 4 am Obertrum angeordnet. In Figur 2 sind die gerade nicht fördernden Förderelemente mit dem Bezugszeichen 4" bezeichnet. Durch die erfindungsgemäße Anordnung des Transportbandes 3 in einem Winkel α von 45° zur Ebene E und die Verwendung der im Winkel β von 135° abgewinkelten Halter 5 wird es möglich, dass die Förderelemente 4 während ihrer Förderung über die Förderstrecke senkrecht zur Ebene E angeordnet sind und während ihrer Rückförderung parallel zur Ebene E angeordnet sind. Somit wird der notwendige Platzbedarf, welcher üblicherweise unterhalb der Förderstrecke notwendig ist, deutlich reduziert. Dadurch kann insbesondere eine Bauhöhe H der Transporteinrichtung 2 signifikant reduziert werden. Weiterhin entsteht dadurch unterhalb der Förderstrecke ein Freiraum, in welchem die Rinne 22 angeordnet werden kann. Dadurch ist die Rinne 22 gut erreichbar und kann insbesondere auch sehr gut und einfach gereinigt werden. Weiterhin ist es erfindungsgemäß möglich, dass die Hauptbauteile der Transporteinrichtung 2 hinter einem Staubschutz angeordnet werden kann. Der Staubschutz umfasst ein erstes Blech 10a und ein zweites Blech 10b. Diese beiden Bleche 10a, 10b sind in Figur 2 gezeigt. Insbesondere der Antrieb 12 und das Transportband 3 mit den beiden Zahnriemenrädern 23, 24 können hinter den Blechen 10a, 10b angeordnet werden, so dass sie vor Staub bzw. einem geförderten kleinkörnigen Gut geschützt sind. Hierdurch wird der gesamte Reinigungsaufwand für die Maschine drastisch reduziert. Auch die Rückförderung der gerade nicht fördernden Förderelemente 4"erfolgt hinter den Blechen 10a, 10b in geschützter Weise.

Die Funktion der erfindungsgemäßen Maschine ist dabei wie folgt, zuerst werden mittels einer Schlauchbeutelmaschine 19, welche ein Teil der Füll- und Fördermaschine 1 ist, ein körniges Gut, wie z.B. Kaffee oder Mehl o.ä., in Schlauchbeutel eingefüllt. In der

Schlauchbeutelmaschine 19 werden diese Schlauchbeutel durch eine Schneideinrichtung von dem Endlosschlauch abgetrennt und in ein Förderelement 4 zugeführt. Dies ist in Figur 4 und 5 durch den Pfeil A angedeutet. Da während des Befüllvorgangs sich relativ viel Luft im Füllgut 17a befindet, wird während der Förderung des oben offenen Beutels 17 in Pfeilrichtung B über die Förderstrecke die Rütteleinrichtung 11 betätigt. Dadurch kann das Füllgut 17a im Beutel 17 verdichtet werden. Am Ende der Förderstrecke ist die Verschließeinrichtung 18 angeordnet, welche den oben offenen Beutel z.B. mittels Verschweißen verschließt. Anschließend wird der verschlossene Beutel mit dem verdichteten Füllgut 17a an das Förderband 21 abgegeben, von welchem er dann entnommen werden kann.

Wie in Figur 5 gezeigt, wird das Förderelement 4 am Ende der Förderstrecke im Bereich der Verschließeinrichtung 18 durch das zweite Zahnriemenrad 24 umgelenkt, so dass es während der Rückförderstrecke am Untertrum senkrecht zu den sich am Obertrum befindenden Förderelementen angeordnet ist. Durch die Schrägstellung des Transportbandes 3 im Winkel von 45° zur Ebene E laufen somit Obertrum und Untertrum nicht mehr vertikal unmittelbar übereinander, sondern seitlich zueinander versetzt (vgl. Figur 2). Hiedurch weist die Transporteinrichtung 2 eine etwas größere Tiefe auf, was jedoch unkritisch ist, da die Tiefe der gesamten Füll- und Fördermaschine 1 nicht durch die Tiefe der Transporteinrichtung 2 bestimmt ist.

Es sei angemerkt, dass im Rahmen der Erfindung verschiedene Modifikationen möglich sind, ohne den Umfang der Erfindung zu verlassen. Insbesondere ist es möglich, dass beispielsweise die abgewinkelten Halter 5 direkt am Transportband 3 angeordnet werden können, so dass die Förderelemente 4, welche am Halter 5 befestigt sind, direkt mit dem Transportband 3 in Verbindung sind. Ferner ist es möglich, dass anstelle der im Ausführungsbeispiel dargestellten Förderelemente 4 mit nur einer vorderen und einer hinteren Seitenwand 4a, 4b auch andere Förderelemente, wie z.B. nur oben offene Becher o.ä., verwendet werden können. Anstelle des Transportbandes 3 kann selbstverständlich auch eine Kette oder ein Seil oder ein anderes geschlossen umlaufendes Transportmittel verwendet werden. Durch die erfindungsgemäße einfache Ausgestaltung der Anordnung des Obertrums und des Untertrums in einer Ebene in einem Winkel von ca. 45° zu einer horizontalen Ebene E können die erfindungsgemäßen Vorteile unabhängig von der Art des umlaufenden Transportmittels erreicht werden.

Die erfindungsgemäße Transporteinrichtung kann dabei in verschiedensten Abfüll- und Verpackungsmaschinen verwendet werden. Aufgrund ihres geringen Platzbedarfs und der Möglichkeit, dass die Förderstrecke, an welcher die Förderelemente 4 senkrecht angeordnet sind, so vorgesehen sein kann, dass direkt unterhalb der Förderstrecke keine Rückförderung erfolgt, kann eine Schmutz aufnehmende Rinne 22 angeordnet werden und durch das Vorsehen der Bleche 10a, 10b ein optimaler Staubschutz der Transporteinrichtung sichergestellt werden.

## Patentansprüche

1. Transporteinrichtung, umfassend ein umlaufendes band förmiges Transportmittel (3), einen Antrieb (12) zum Antreiben des umlaufenden,Transportmittels (3), wenigstens ein Förderelement (4), welches gemeinsam mit dem umlaufenden Transportmittel (3) umläuft, wobei das umlaufende Transportmittel (3) derart angeordnet ist, dass eine senkrecht durch ein Obertrum und ein Untertrum des Transportmittels gebildete Ebene (F) in einem Winkel (α) von ca. 45° zu einer waagerechten Ebene (E) angeordnet ist, **gekennzeichnet durch** eine ortsfeste, umlaufend geschlossene Schiene (7), wobei ein mit dem Förgelement (4) verbundener Halter (5) an einem an der schiene (7) verfahrbar angeordneten Laufwagen (8) fixiert ist, wobei sich der Halter (5) und/oder der Laufwagen (8) mit einem vorstehenden Element (6) am Transportmittel (3) in Eingriff befindet.

2. Transporteinrichtung nach Anspruch 1, **dadurch gekennzeichnet, dass** das Förderelement (4) einen Halter (5) mit einem ersten Schenkel (5a) und einem zweiten Schenkel (5b) umfasst, wobei der erste Schenkel (5a) zum zweiten Schenkel (5b) in einem Winkel (β) von ca. 135° angeordnet ist, und das Förderelement (4) derart am Halter (5) angeordnet ist, dass eine Öffnung des Förderelements (4) am Obertrum des Transportmittels (3) nach oben geöffnet ist.

3. Transporteinrichtung nach Anspruch 1 oder 2, **dadurch gekennzeichnet, dass** das vorstehende Element (6) an der nach außen gerichteten Seite des Transportmittels angeordnet ist.

4. Transporteinrichtung nach einem der vorhergehenden Ansprüche, **dadurch gekennzeichnet, dass** das Förderelement (4) eine erste Seitenwand (4a) und eine zweite Seitenwand (4b) umfasst, welche im Wesentlichen parallel zueinander angeordnet sind, wobei die erste Seitenwand (4a) an einem ersten Halter fixiert ist und die zweite Seitenwand (4b) an einem zweiten Halter fixiert ist.

5. Transporteinrichtung nach Anspruch 4, **dadurch gekennzeichnet, dass** an einem Halter (5) eine Seitenwand eines ersten Förderelements (4) und eine Seitenwand eines zweiten Förderelements (4') fixiert ist.

6. Transporteinrichtung nach einem der vorhergehenden Ansprüche, **dadurch gekennzeichnet, dass** das Transportmittel (3) ein Zahnriemen ist.

7. Transporteinrichtung nach einem der vorhergehenden Ansprüche, **dadurch gekennzeichnet, dass** das Förderelement (4) nach oben und nach unten offen ist und unterhalb des Förderelements (4) im Bereich des Obertrums des Transportmittels (3) eine Tragschieneneinrichtung (15) angeordnet ist, um einen Boden für das Förderelement (4) zu bilden.

8. Transporteinrichtung nach Anspruch 7, **dadurch gekennzeichnet, dass** die Tragschieneneinrichtung (15) mehrere einzelne Tragschienen (16) umfasst, wobei die Tragschienen (16) in Vertikalrichtung höhenverstellbar sind und das Förderelement (4) an seiner nach unten offenen Seite eine Vielzahl von Schlitzen (14) umfasst, in welchen die Tragschienen (16) in Vertikalrichtung verschiebbar angeordnet sind.

9. Transporteinrichtung nach einem der vorhergehenden Ansprüche, **dadurch gekennzeichnet, dass** unterhalb des Obertrums des Transportmittels (3) eine Rinne (22) zur Aufnahme von herabfallendem Fördergut angeordnet ist.

10. Transporteinrichtung nach einem der vorhergehenden Ansprüche, ferner umfassend eine Rüttelvorrichtung (11), um die sich am Obertrum des Transportmittels (3) befindlichen Förderelemente (4) und/oder ein zu förderndes Produkt (17) in Vibration zu bringen.

11. Transporteinrichtung nach einem der vorhergehenden Ansprüche, ferner umfassend eine Verschließeinrichtung (18), welche an einem Ende des Obertrums in Förderrichtung (B) angeordnet ist, um ein Verschließen einer geöffneten Verpackung auszuführen.

12. Füll- und/oder Verpackungsmaschine, umfassend eine Transporteinrichtung nach einem der vorhergehenden Ansprüche.

## Claims

1. Transporting arrangement comprising a circulating belt-like transporting means (3), a drive (12) for driving the circulating transporting means (3), and at least one conveying element (4), which circulates together with the circulating transporting means (3), wherein the circulating transporting means (3) is arranged such that a plane (F) formed perpendicularly in relation to an upper strand and a lower strand of the transporting means is arranged at an angle (α) of approximately 45° in relation to a horizontal plane (E), **characterized by** a fixed-location rail (7) which is closed all the way round, wherein a holder (5), which is connected to the conveying element (4), is fixed on a carriage (8) arranged in a displaceable manner on the rail (7), wherein the holder (5) and/or the carriage (8) are/is in engagement with a projecting element (6) on a transporting means (3).

2. Transporting arrangement according to Claim 1, **characterized in that** the conveying element (4) comprises a holder (5) with a first limb (5a) and a second limb (5b), wherein the first limb (5a) is arranged at an angle (β) of approximately 135° in relation to the second limb (5b), and the conveying element (4) is arranged in the holder (5) such that an opening of the conveying element (4) is open in the upward direction on the upper strand of the transporting means (3).

3. Transporting arrangement according to Claim 1 or 2, **characterized in that** the projecting element (6) is arranged on the outwardly directed side of the transporting means.

4. Transporting arrangement according to one of the preceding claims, **characterized in that** the conveying element (4) comprises a first side wall (4a) and a second side wall (4b), which are arranged essentially parallel to one another, wherein the first side wall (4a) is fixed on a first holder and the second side wall (4b) is fixed on a second holder.

5. Transporting arrangement according to Claim 4, **characterized in that** a side wall of the first conveying element (4) and a side wall of a second conveying element (4') are fixed on a holder (5).

6. Transporting arrangement according to one of the preceding claims, **characterized in that** the transporting means (3) is a toothed belt.

7. Transporting arrangement according to one of the preceding claims, **characterized in that** the conveying element (4) is open in the upward and downward directions, and a carrying-rail arrangement (15) is provided beneath the conveying element (4), in the region of the upper strand of the transporting means (3), in order to form a base for the conveying element (4).

8. Transporting arrangement according to Claim 7, **characterized in that** the carrying-rail arrangement (15) comprises a plurality of individual carrying rails (16), wherein the carrying rails (16) can be adjusted in height in the vertical direction and the conveying element (4), on its side which is open in the downward direction, comprises a multiplicity of slots (14), in which the carrying rails (16) are arranged such that they can be displaced in the vertical direction.

9. Transporting arrangement according to one of the preceding claims, **characterized in that** a channel (22) for receiving falling articles is arranged beneath the upper strand of the transporting means (3).

10. Transporting arrangement according to one of the preceding claims, further comprising a vibrating device (11), by means of which a product (17) which is to be conveyed and/or the conveying elements (4) located on the upper strand of the transporting means (3) is/are set in vibration.

11. Transporting arrangement according to one of the preceding claims, further comprising a closing arrangement (18), which is arranged at one end of the upper strand, as seen in the conveying direction (B), in order to close an open pack.

12. Filling and/or packaging machine comprising a transporting arrangement according to one of the preceding claims.

## Revendications

1. Dispositif de transport, comprenant un moyen de transport (3) en forme de bande en rotation, un entraînement (12) pour entraîner le moyen de transport (3) en rotation, au moins un élément convoyeur (4) qui est entraîné en rotation conjointement avec le moyen de transport (3) en rotation, le moyen de transport (3) en rotation étant disposé de telle sorte qu'un plan (F) formé perpendiculairement à travers un tronçon supérieur et un tronçon inférieur du moyen de transport soit disposé suivant un angle (α) d'environ 45° par rapport à un plan horizontal (E), **caractérisé par** un rail (7) fixe, en boucle fermée, un dispositif de retenue (5) connecté à l'élément convoyeur (4) étant fixé à un chariot de roulement (8) disposé de manière déplaçable sur le rail (7), le dispositif de retenue (5) et/ou le chariot de roulement (8) étant en prise avec un élément saillant (6) sur le moyen de transport (3).

2. Dispositif de transport selon la revendication 1, **caractérisé en ce que** l'élément convoyeur (4) comprend un dispositif de retenue (5) avec une première branche (5a) et une deuxième branche (5b), la première branche (5a) étant disposée par rapport à la deuxième branche (5b) suivant un angle (β) d'environ 135°, et l'élément convoyeur (4) étant disposé sur le dispositif de retenue (5) de telle sorte qu'une ouverture de l'élément convoyeur (4) au niveau du tronçon supérieur du moyen de transport (3) soit ouverte vers le haut.

3. Dispositif de transport selon la revendication 1 ou 2, **caractérisé en ce que** l'élément saillant (6) est disposé du côté du moyen de transport orienté vers l'extérieur.

4. Dispositif de transport selon l'une quelconque des revendications précédentes, **caractérisé en ce que** l'élément convoyeur (4) comprend une première paroi latérale (4a) et une deuxième paroi latérale (4b), qui sont disposées essentiellement parallèlement l'une à l'autre, la première paroi latérale (4a) étant fixée à un premier dispositif de retenue et la deuxième paroi latérale (4b) étant fixée à un deuxième dispositif de retenue.

5. Dispositif de transport selon la revendication 4, **caractérisé en ce que** sur un dispositif de retenue (5) sont fixées une paroi latérale d'un premier élément convoyeur (4) et une paroi latérale d'un deuxième élément convoyeur (4').

6. Dispositif de transport selon l'une quelconque des revendications précédentes, **caractérisé en ce que** le moyen de transport (3) est une courroie dentée.

7. Dispositif de transport selon l'une quelconque des revendications précédentes, **caractérisé en ce que** l'élément convoyeur (4) est ouvert vers le haut et vers le bas et un dispositif de rail porteur (15) est disposé en dessous de l'élément convoyeur (4) dans la région du tronçon supérieur du moyen de transport (3), afin de former un fond pour l'élément convoyeur (4).

8. Dispositif de transport selon la revendication 7, **caractérisé en ce que** le dispositif de rail porteur (15) comprend plusieurs rails porteurs individuels (16), les rails porteurs (16) étant déplaçables en hauteur dans la direction verticale et l'élément convoyeur (4) comprenant sur son côté ouvert vers le bas une pluralité de fentes (14) dans lesquelles sont disposés les rails porteurs (16), de manière déplaçable dans la direction verticale.

9. Dispositif de transport selon l'une quelconque des revendications précédentes, **caractérisé en ce qu'**une rigole (22) est prévue sous le tronçon supérieur du moyen de transport (3) pour recevoir le produit transporté qui tombe.

10. Dispositif de transport selon l'une quelconque des revendications précédentes, comprenant en outre un dispositif de secouage (11) pour faire vibrer les éléments convoyeurs (4) se trouvant au niveau du tronçon supérieur du moyen de transport (3) et/ou un produit à convoyer (17).

11. Dispositif de transport selon l'une quelconque des revendications précédentes, comprenant en outre un dispositif de fermeture (18) qui est disposé à une extrémité du tronçon supérieur dans la direction de convoyage (B), afin d'effectuer une fermeture d'un emballage ouvert.

12. Machine de remplissage et/ou d'emballage, comprenant un dispositif de transport selon l'une quelconque des revendications précédentes.
